# EUROPÄISCHE PATENTSCHRIFT

(11) **EP 1 631 369 B1**
(45) Veröffentlichungstag und Bekanntmachung des Hinweises auf die Patenterteilung: **06.12.2006**
(21) Anmeldenummer: 04739729.4
(22) Anmeldetag: 09.06.2004
(51) Int. Cl.: B01D 61/06, B01D 61/10, F04D 13/14, F04D 1/10, C02F 1/44

(54) **PUMPEN-DRUCKTAUSCHER-SYSTEM FÜR DIE UMKEHROSMOSE**
PUMP-PRESSURE-EXCHANGER SYSTEM FOR REVERSE OSMOSIS PROCESSES
SYSTEME POMPE-ECHANGEUR DE PRESSION D'OSMOSE-INVERSE

(30) Priorität: 18.06.2003 DE 10327401
(43) Veröffentlichungstag der Anmeldung: 08.03.2006
(73) Patentinhaber: KSB Aktiengesellschaft, 67227 Frankenthal (DE)
(72) Erfinder: MOLLENKOPF, Gerhard, 69126 Heidelberg (DE); BRUHNS, Uwe, 67574 Osthofen (DE); KOCHANOWSKI, Wolfgang, 55452 Windesheim (DE); BAUMGARTEN, Sven, 67273 Dackenheim (DE); BROSS, Stephan, 67167 Erpolzheim (DE); BRECHT, Bernhard, 67433 Neustadt/Weinstrasse (DE); JÄGER, Christoph, 67229 Gerolsheim (DE); ELLEGAARD, Mogens, 2670 Greve (DK); SCHWARZ, Gerhard, 67273 Dackenheim (DE)
(86) Internationale Anmeldenummer: PCT/EP2004/006218
(87) Internationale Veröffentlichungsnummer: WO 2004/110598

(56) Entgegenhaltungen:
- EP-A- 0 570 350
- EP-A- 1 256 371
- DE-C- 3 719 292
- FR-A- 727 653
- US-A- 5 482 441
- US-A- 5 567 312
- PATENT ABSTRACTS OF JAPAN Bd. 2003, Nr. 12, 5. Dezember 2003 (2003-12-05) -& JP 2004 081913 A (HITACHI ZOSEN CORP), 18. März 2004 (2004-03-18)

## Beschreibung

Die Erfindung betrifft eine Pumpvorrichtung verbunden mit einem Druckwandler für die Aufbereitung von Flüssigkeiten nach dem Prinzip der Umkehrosmose, wobei zwei Pumpen mit einer Welle verbunden sind und von einem gemeinsamen Motor angetrieben werden, und eine erste Pumpe in das Gehäuse einer zweiten Pumpe fördert.

Durch die DE 37 19 292 C1 ist eine gattungsgemäße Pumpvorrichtung bekannt, deren Lösung die Verwendung eines drehzahlgeregelten Nassläufermotor vorsieht. An das Motorgehäuse ist eine Flügelzellenpumpe angeflanscht, an die wiederum und unter Zuhilfenahme einer Motorwellenverlängerung ein Kreiselpumpengehäuse angeflanscht ist. Diese Pumpvorrichtung ist zum Anschluß an ein öffentliches Versorgungsnetz ausgelegt und wird mit dem daraus entnommenem Wasser gespeist. Die Flügelzellenpumpe, welche der Pumpenbauart Verdrängerpumpen zuzuordnen ist, erzeugt den für den Betrieb einer Umkehrosmosevorrichtung notwendigen hohen osmotischen Druck. Sie funktioniert für die Umkehrosmosevorrichtung als Speisepumpe, während die nachgeordnete Kreiselpumpe nur als Umwälzpumpe mit minimaler Druckerhöhung wirkt. Der hohe osmotische Druck wird ausschließlich von der Verdrängerpumpe erzeugt, deren Liefermenge in das Gehäuse der Kreiselpumpe im Bereich des Laufradaustrittes des Kreiselpumpenlaufrades eingespeist wird. Infolge dieser konstruktiven Ausbildung strömt ein in das Kreiselpumpengehäuse eintretendes Wasser unter Umgehung des Kreiselpumpenlaufrades sofort zum Austritt des Kreiselpumpengehäuses und von dort mit dem hohen Druck der Verdrängerpumpe in die Umkehrosmoseeinrichtung.

Das in die Umkehrosmosevorrichtung eingespeiste Wasser tritt infolge des osmotischen Druckes zum einen Teil durch die Membran hindurch und fließt als gereinigtes Trinkwasser aus der Umkehrosmosevorrichtung ab. Der andere Teil des eingespeisten Wassers strömt dagegen mit höherer Schadstoffkonzentration und geringerem Druck aus der Umkehrosmosevorrichtung aus. Dieser einen höheren Schadstoffanteil aufweisende Wasserteil fließt ganz oder teilweise zur Saugöffnung der als Kreiselpumpe ausgebildeten Umwälzpumpe zurück. Das Kreiselpumpenlaufrad fördert diesen nunmehr mit dem höheren Schadstoffanteil versehenen Wasseranteil wieder zurück zum Eintritt der Umkehrosmoseeinrichtung. Die Druckerhöhung durch das Kreiselpumpenlaufrad gleicht diejenige Druckdifferenz aus, die innerhalb der Umkehrosmosevorrichtung abgebaut wird.

Diese Pumpvorrichtung weist den wesentlichen Nachteil auf, nur für die Reinigung von Wasser geeignet zu sein, welches einem öffentlichen Trinkwasserversorgungsnetz entnommen wird. Denn eine solche Flüssigkeit ist bereits weitgehend von Feststoff- und/oder Schwebstoffen gereinigt und kann daher durch die Verdrängerpumpe in Form der Flügelzellenpumpe problemlos gefördert werden. Für die Verwendung von anderen zu reinigenden Flüssigkeiten, wie salzhaltigem Seewasser, Brackwasser oder sonstigen verschmutzten Flüssigkeiten, ist diese Pumpvorrichtung ungeeignet, da sie von den Verunreinigungen innerhalb kürzester Zeit zerstört werden würde. Weiterhin hat sie den gravierenden Nachteil, daß in dem durch die Umkehrosmosevorrichtung ständig zirkulierenden Wasseranteil allmählich eine immer höhere Konzentration schädlicher, korrosiver oder abrasiver Stoffe aufgebaut wird. Auch das von der Verdrängerpumpe, als Ersatz für ein entnommenes gereinigtes Trinkwasser, nachgespeiste und noch zu reinigende Wasser kann diese Konzentrationssteigerung der Schadstoffe nicht ausgleichen.

Die Entnahme von ungereinigtem und zusätzlich mit einem höheren Schadstoffgehalt ausgestattetem Wasser erfolgt zu anderen als Trinkwasserzwecken. Eine solche Entnahme erfolgt unter Zwischenschaltung zweier Regelventile und entweder nach der Umkehrosmosevorrichtung und/oder hinter dem durchströmten Nassläufermotor der Pumpvorrichtung. Die Regelventile dienen dazu, den Druck innerhalb der Umkehrosmosevorrichtung nicht unter die funktionsnotwendige Größe fallen zu lassen. Infolgedessen wird der nach der Umkehrosmosevorrichtung vorherrschende hohe Druck nicht genutzt, sondern durch die Regelventile vernichtet. Für die Wirtschaftlichkeit einer solchen Anlage ist dies von Nachteil. Und ein weiterer wesentlicher Nachteil ist die spätere Verwendung des mit den schädlichen Stoffen aufkonzentrierten Wasseranteiles an den Verbrauchsstellen. Hier wäre es sinnvoller, stattdessen das direkt dem öffentlichen Versorgungsnetz entnommene Rohwasser zu verwenden. Denn dieses weist vor dem Durchlaufen der Umkehrosmosevorrichtung eine wesentlich geringere Belastung auf als es nach dem Durchlauf durch die Umkehrosmosevorrichtung der Fall ist.

Eine analoge Strömungsführung unter Verwendung einer anderen Pumpenkonstruktion zeigt auch die US 5 567 312, welche als gattungsgemäße Vorrichtung angesehen wird. Diese Kreiselpumpenkonstruktion geht von der Bauart der mehrstufigen Unterwassermotorpumpen aus. Der Motorteil der Unterwassermotorpumpe ist von einem sogenannten Saugmantel umgeben und mit einem Anschluss für die Zufuhr einer zu fördernden Lösung versehen. Die Lösung strömt kühlend über die Oberfläche des Motors und tritt an dessen anderen Ende in einen ersten Pumpenteil ein. Zwischen dem ersten Pumpenteil und einem zweiten Pumpenteil ist ein Führungsteil angeordnet. Die Lösung durchströmt beide Pumpenteile und wird mit hohen Druck in ein Reverse-Osmose Modul eingespeist. Darin erfolgt eine Abscheidung eines Flüssigkeitsanteiles, hier Wasser, welches auf der anderen Membranseite austritt und entsorgt wird. Die ursprünglich eingespeiste Lösung strömt, verringert um den abgeschiedenen Wasseranteil, zur Pumpenkonstruktion zurück und tritt mit hohen Restdruck in den Führungsteil ein. Den Druckverlust im Reverse-Osmose Modul gleicht der zweite Pumpenteil aus und den Wasserverlust ersetzt ein vom ersten Pumpenteil nachströmender frischer Lösungsanteil. Durch wiederholte Rezirkulation der Lösung zwischen zweiten Pumpenteil und Reverse-Osmose Modul wird eine Flüssigkeit mit höherer Konzentration erzeugt, hier Ahornsirup. Erreicht dieser seine gewünschten Zuckerkonzentration, wird der fertige Ahomsirup dem Kreislauf entnommen. Diese Einrichtung dient ausschließlich zur Verdickung einer Lösung, hier Ahornsaft, wobei im Bereich der Führungselemente, einer Art von Mischkammer, eine Zufuhr von frischer Lösung und eine Vermischung von frischer Lösung mit aufkonzentriertem Sirup erfolgt. Der zweite Pumpenteil hat nur eine Umwälzfunktion für den zu konzentrierenden Flüssigkeitsteil, der mehrfach durch das Reverse-Osmose Modul zirkulieren muss, um seinen Wasseranteil zu verlieren. Dem Ahornsaft wird der Wasseranteil nicht mehr durch Wärmeerzeugung, sondern durch Verwendung von Reverse-Osmose Membranen entzogen. Hier bestehen die gleichen Nachteile wie bei der DE 37 19 292 C1.

Bei großen Reverse-Osmose Anlagen jedoch, mit deren Hilfe ganze Hotels, Städte oder Inseln mit Trinkwasser versorgt werden, stellt die Wirtschaftlichkeit, neben der Funktionssicherheit einer solchen Anlage, den entscheidenden Faktor dar. Die aus einem Reverse-Osmose Modul austretende Flüssigkeit, das sogenannte Brine, weist neben einem höheren Schadstoffgehalt immer noch einen sehr hohen Druck auf, welcher in der Größenordnung von ca. 60 bar liegt. Dieser Druck wird zum Beispiel mit Hilfe einer Turbine zurückgewonnen, wobei die Turbine dann als Antrieb für eine Hochdruckpumpe dient, mit deren Hilfe die zu reinigende Flüssigkeit in ein Reverse-Osmose Modul eingespeist wird. Nach dem Druckabbau in der Turbine fließt ein solcherart entspanntes Brine drucklos zurück ins Meer oder zu entsprechend anderen Entsorgungsorten.

Eine andere Möglichkeit zum wirtschaftlichen energiesparenden Betrieb einer Reverse-Osmose Anlage sieht die Verwendung eines sogenannten Druckwandlers vor, wie er beispielsweise durch die US 5 306 428 bekannt ist. Dabei überträgt das aus einem Reverse-Osmose Modul ausströmende, unter hohem Druck stehende und eine höhere Schadstoffkonzentration aufweisende Brine mit Hilfe der Druckwandler den hohen Druck auf eine noch zu reinigende Flüssigkeit. Somit ist um das Maß dieser übertragenen Drucksteigerung eine geringere Pumpenantriebsleistung für diesen einzuspeisenden Flüssigkeitsanteil erforderlich, um den für die Funktionsfähigkeit des Reverse-Osmose Verfahrens notwendigen hohen Druck zu erzeugen. Solche Anlagen verwenden zwei separate Pumpen, nämlich eine erste Pumpe, mit deren Hilfe eine Teilmenge einer zu reinigende Flüssigkeit auf den funktionsnotwendigen hohen osmotischen Druck von ca. 65 bar gebracht wird. Und eine zweite Pumpe, mit deren Hilfe die verbleibende Teilmenge der zu reinigenden Flüssigkeit, die mengenmäßig dem aus dem Reverse-Osmose Modul austretenden ungereinigten Flüssigkeitsteil entspricht, im Druck gesteigert wird. Eine solche zweite Pumpe erzeugt nur noch diejenige Druckdifferenz, die innerhalb eines Reverse-Osmose Moduls abgebaut wird.

Der Erfindung liegt das Problem zugrunde, eine Pumpeneinheit zu entwickeln, mit deren Hilfe bei hoher Funktionssicherheit eine wirtschaftliche Produktion von Trink- oder Reinstwasser möglich ist.

Die Lösung dieses Problems sieht vor, daß eine mehrstufige erste Kreiselpumpe eine Flüssigkeit mit hohen Druck in einen Sammelraum fördert, daß der Sammelraum eine Eintrittsöffnung für eine zusätzliche Einspeisung von unter hohem Druck stehender Flüssigkeit aufweist welche mit einem Drucktauscher verbunden ist und daß eine für große Fördermengen und geringe Drucksteigerungen ausgelegte zweiten Kreiselpumpe mit dem Sammelraum verbunden ist. Mit Hilfe dieser Lösung wird ein sehr kompaktes Pumpenaggregat erzeugt, bei dem in an sich bekannter Weise die Pumpenteile auf einer gemeinsamen Welle angeordnet sind. Dabei ist der Sammelraum im Bereich zwischen der ersten und zweiten Kreiselpumpe angeordnet.

Durch die Hintereinanderschaltung der Pumpen saugt die zweite Kreiselpumpe direkt die darin vereinigten Flüssigkeitsströme aus dem Sammelraum an. Der Sammelraum bildet in diesem Fall gleichzeitig ein Sauggehäuse für die zweite Kreiselpumpe. Damit wird eine Kreiselpumpeneinheit geschaffen, bei die Fördermenge der ersten Kreiselpumpe und die Teilmenge eines weiteren, unter hohem Druck stehenden, zu reinigenden Flüssigkeitsstromes und auch die Drücke dieser Teilströme in Reihe geschaltet sind. Somit wird eine aus einem Druckwandler austretende Flüssigkeit mit hohen Druck in den Sammelraum eingespeist und von dort von der zweiten Kreiselpumpe angesaugt. Nach Verlassen der letzten Pumpenstufe der Pumpeneinheit strömt die Gesamtmenge einer zu reinigenden Flüssigkeit einem Reverse-Osmose Modul zu.

Die Eintrittsöffnung des Sammelraumes ist mit einem Druckwandler verbunden. Hierbei können Verbindungen mit allen bekannten Druckwandlerbauarten hergestellt werden, mit deren Hilfe eine Drucksteigerung für eine zu reinigende Flüssigkeit möglich ist.

Eine andere Ausgestaltung der Erfindung sieht vor, daß die letzte Stufe der ersten Kreiselpumpe mit einer ein- oder verstellbaren Leiteinrichtung versehen ist. In dieser Leiteinrichtung kann eine Beeinflussung der Druckenergie der aus der ersten Kreiselpumpe austretenden Flüssigkeit erfolgen. Damit ergibt sich eine Regelmöglichkeit, um zwischen den Kreiselpumpen eine Anpassung der Druckverhältnisse zu erreichen. Dies ist notwendig, um im Sammelraum infolge der durch die Eintrittsöffnung darin einzuspeisenden Flüssigkeit mit hoher Druckenergie ein Überströmen in die erste Kreiselpumpe zu vermeiden. Somit wird in einfachster Weise ein Ungleichgewicht der sich im Sammelraum vereinigenden Flüssigkeitsströme vermieden.

Um eine Anpassung der Pumpvorrichtung an verschiedene Betriebszustände einer Revers-Osmose Anlage zu erhalten, ist nach einer weiteren Ausgestaltung eine ein- oder verstellbare Leiteinrichtung an der ersten und/oder zweiten Kreiselpumpe angeordnet und womit die Fördermenge geregelt wird. Durch die unterschiedlichen Kennlinien der beiden Pumpentypen sowie der sich während eines Reinigungsprozesses verändernden Eigenschaften eines Revers Osmose Moduls ist eine Regelung der Fördermenge erforderlich. Dabei können ein- oder verstellbare Leitschaufeln die Leiteinrichtung bilden. Es ist auch möglich, daß ein- oder verstellbare Schieber, Ringschieber, Drosselblenden oder andere Querschnitt verändernde Mittel die Leiteinrichtung bilden. Oder daß die Leiteinrichtung mit einer ein- oder verstellbaren Eintrittskante versehen ist. Dies wäre zum Beispiel bei einem Spiralgehäuse mit ein- oder verstellbaren Sporn der Fall.

Im Sammelraum angeordnete strömungsführende Einbauten bewirken eine verlustarme Strömungsführung und Vereinigung der im Sammelraum aufeinandertreffenden Flüssigkeitsströme. Gleichzeit dient dies zur verlustarmen Einleitung in die nachgeordnete und druckerhöhende zweite Kreiselpumpe.

Ein durch die zweite Pumpe strömender Gesamtförderstrom besteht zu 50 - 30 % aus dem Förderstrom der ersten Kreiselpumpe und zu 50 - 70 % aus einem Förderstromanteil, der einer Menge entspricht, die in den Sammelraum zusätzlich eingespeist wird. Letzteres ist abhängig von dem jeweiligen Liefergrad eines angeschlossenen Reverse Osmose Moduls, bei dem sich mit zunehmender Betriebsdauer und bedingt durch eine Alterung der darin verwendeten Membranen eine Veränderung im Liefergrad einstellt.

Zur Einstellung des Gesamtförderstromes der Pumpvorrichtung kann auch eine Drosselregelung Verwendung finden, die in einer mit der Eintrittsöffnung für die zusätzliche Einspeisung verbundenen Leitung angeordnet ist. Dies erleichtert eine einfache Anpassung der zu fördernden Teilströme.

Nach weiteren Ausgestaltungen ist die zweite Kreiselpumpe mit einer ein- oder verstellbaren Lauf- und/oder Leiteinrichtung versehen und daß in der zweiten Kreiselpumpe Laufräder mit einer spezifischen Drehzahl nq = 40 - 200 min⁻¹ angeordnet sind. In Abhängigkeit von der jeweiligen Fördermenge an Reinwasser oder Permeat, welches eine Reverse-Osmose Anlage im Betrieb liefern soll, wird die erste Kreiselpumpe der Pumpvorrichtung ausgewählt. In Abhängigkeit von der Fördermenge der ersten Kreiselpumpe findet dann für zu liefernde Permeatmengen ab einem Qₒₚₜ ~ 60 m³/h in der zweiten Kreiselpumpe ein Kreiselpumpenlaufrad mit einer spezifischen Schnellläufigkeit zwischen nq ~ 40 - 60 min⁻¹ Verwendung. Und für zu liefernde Permeat- oder Reinwassermengen bei einem Qₒₚₜ ~ 800 m³/h findet dann in der zweiten Kreiselpumpe ein Kreiselpumpenlaufrad mit einer spezifischen Schnellläufigkeit zwischen nq ~ 150 - 200 min⁻¹ Verwendung. Die Auswahl der spezifischen Schnellläufigkeit der zweiten Kreiselpumpe ist abhängig von jeweiligen Recovery-Rate, mit der eine Reverse-Osmose Anlage betrieben wird. Die Recovery-Rate ergibt den prozentualen Anteil von Reinwasser oder Permeat an einer zu reinigenden Menge. Bei Anlagen, deren Recovery-Rate bei 30 % liegt, finden dann in der zweiten Kreiselpumpe Laufräder mit dem hohen nq-Wert Verwendung, während bei Recovery-Raten von 50% die Laufräder mit den niedrigen nq-Werten Verwendung finden. Zwischen diesen Werten liegende Recovery-Raten bedingen dann Laufräder mit entsprechende geänderten nq-Werten.

Eine andere Ausgestaltung der Erfindung sieht vor, daß in die Pumpvorrichtung und vor der ersten Kreiselpumpe eine zusätzliche Vorpumpe integriert ist. Beim Betrieb von Druckwandlern sind solche Vorpumpen notwendig, um denjenigen Teil der Fördermenge, der innerhalb des Druckwandlers mit höherer Energie versorgt wird, zum Druckwandler selbst zu fördern und dessen Funktion zu gewährleisten. Wird beispielsweise in einem Reverse-Osmose Modul aus 100% einer zu reinigenden Flüssigkeit ca. 40% Reinwasser oder Permeat gewonnen, dann stellen die verbleibenden ca. 60% höher konzentriertes Abwasser oder Brine dar. Eine Vorpumpe fördert daher ca. 60% einer zu reinigenden Flüssigkeit zum Druckwandler. Im Druckwandler wird auf diese Menge der höhere Druck des Brine übertragen und vom Druckwandler wird die Menge mit dem höheren Druck der Pumpvorrichtung zugeführt. Eine solche Druckwandler-Vorpumpe kann daher ebenfalls in die Pumpvorrichtung als eine zusätzliche Vorpumpe integriert werden. Diese wäre dann der ersten Kreiselpumpe vorangestellt und würde vom gleichen Motor angetrieben werden. Dabei werden die für einen Druckwandler in etwa notwendigen 60% Anteil an der Gesamt-Fördermenge der Vorpumpe im Rahmen einer an sich bekannten Gehäuseanzapfung entnommen und an den Druckwandler abgezweigt.

Ebenso kann eine Regelung der Fördermenge der Pumpeinrichtung auch dadurch erfolgen, daß eine im Sammelraum bestehende Drallströmung durch eine variable Zuführung der in den Sammelraum einmündenden Teilströme verändert wird. Somit ergeben sich andere Zuströmbedingungen zu der zweiten Pumpe, wodurch deren Kennlinie verändert wird.

Ausführungsbeispiele der Erfindung sind in den Zeichnungen dargestellt und werden im folgenden näher beschrieben. Es zeigen die
- Fig. 1: ein bekanntes Druckwandlerprinzip nach der US 5 306 428, die
- Fig. 2: ein Schaltschema einer erfindungsgemäßen Pumpvorrichtung, die
- Fig. 3: ein Schaltschema einer erfindungsgemäße Pumpvorrichtung mit integrierter Vorpumpe, die
- Fig. 4: eine Schnittzeichnung durch eine Pumpvorrichtung nach Fig. 2.

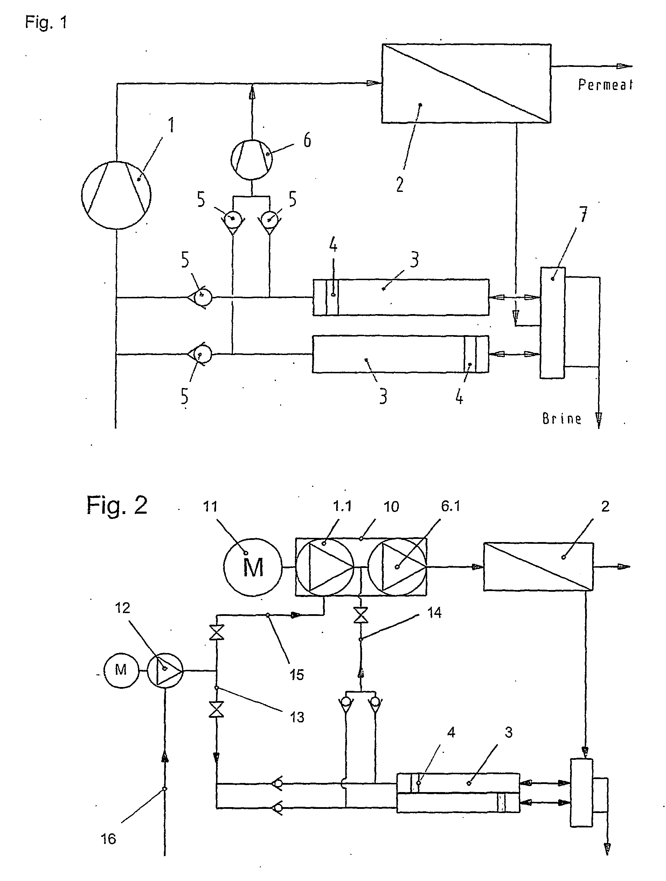

Fig.1 zeigt eine Reverse-Osmose Anlage gemäß dem Stand der Technik. Eine Hochdruckpumpe 1 fördert ein zu reinigendes Fluid, gewöhnlich Wasser in Form von See-, Meer-, Brack- oder auch Abwasser, zu einem oder mehreren Reverse-Osmose Modulen 2. Infolge des hohen osmotischen Druckes innerhalb dieser Module 2 tritt an den darin angeordneten Membranen ein Abscheideeffekt auf. Hinter den Membranen fließt gereinigtes Wasser, das sogenannte Permeat, mit geringem Druck aus den Modulen 2 ab, wird gesammelt und einer weiteren Verwendung zugeführt.

Ein aus den Reverse-Osmose-Modulen 2 abfließendes ungereinigtes Fluid, das sogenannte Brine, weist nach dem Abscheideprozess eine höhere Konzentrationsdichte an Schadstoffen auf, gewöhnlich Salze, und wird zur ursprünglichen Quelle abgeleitet. Infolge seines hohen Energieinhaltes in Form von Druckenergie, wird das Brine über eine Armatur 7 zur Energierückgewinnung in einen 2-Kammer-Drucktauscher geleitet. In dessen Rohrkammern 3 sind unter Druckeinfluss verschiebbare Trennkolben 4 angeordnet, die eine Trennung zwischen jeweils zwei unterschiedlich mit Druck beaufschlagten Räumen bilden. Es sind auch Anlagen mit Rohrkammern ohne Trennkolben bekannt, jedoch kann es darin zu unerwünschten Durchmischungen zwischen den verschiedenen Flüssigkeiten kommen, wenn das System aus dem Gleichgewicht gerät oder die Steuerzeiten nicht mehr stimmen.

In der Fig. 1 hat der hohe Druck des Brine einen in der oberen, ersten Rohrkammer 3 befindlichen Kolben 4 auf die von der Armatur 7 entfernt liegenden Seite gedrückt. Dabei wurde der Druck des Brine auf ein in der Rohrkammer links vom Kolben befindliche, noch zu reinigende sowie druckärmere Fluid übertragen. Dieses links vom Kolben befindliche Fluid ist mit hohem Druck auf der linken Seite der oberen Rohrkammer 3 ausgetreten und durch Rückschlagarmaturen 5 einer separaten Boosterpumpe 6 zugeflossen, die innerhalb eines zweiten Rohrleitungssystems angeordnet ist. Mit Hilfe der Boosterpumpe 6 wird derjenige geringe Druckabfall kompensiert, der beim osmotischen Reinigungsprozess in den Modulen 2 selbst entsteht. Die Boosterpumpe 6 muss infolge der Energierückgewinnung nur noch diejenige Druckdifferenz erzeugen, die innerhalb der Reverse-Osmose Module 2 verloren geht. Sie ist deshalb wesentlich kleiner und damit kostengünstiger gestaltet, als bei einer Anlage ohne Energierückgewinnung. Die Antriebsmotoren der Pumpen 1, 6 sind in der Fig. 1 nicht dargestellt.

Durch die Integration der Boosterpumpe direkt in das Gehäuse der Hauptpumpe ergibt sich eine wesentliche Verringerung des gesamten Bauaufwandes. Außerdem wird dadurch ein komplettes Pumpengehäuse und ein zusätzlicher Antriebsmotor für eine bisher erforderliche Boosterpumpe eingespart.

Fig. 2 zeigt das Schaltschema einer erfindungsgemäßen Pumpvorrichtung 10 in Verbindung mit einem Druckwandler. Innerhalb der Pumpvorrichtung 10 sind auf einer gemeinsamen Welle eine mehrstufige erste Kreiselpumpe 1.1 als Hochdruckpumpe und eine für große Fördermengen ausgelegte zweite Kreiselpumpe 6.1 angeordnet.

Der Antrieb der Pumpvorrichtung 10 erfolgt über einen gemeinsamen Motor 11. In die Reverse-Osmose Anlage wird ein zu reinigendes Fluid mit Hilfe einer Vorpumpe 12 eingespeist.

In Abhängigkeit von der jeweiligen Arbeitsstellung der Kolben 4 in den Rohrkammern 3 des Drucktauschers strömt ein Teilstrom des zu reinigenden Fluids über eine Leitung 13 abwechselnd in eine der Rohrkammern 3. In den Rohrkammern 3 erfolgt eine Druckerhöhung infolge der Druckübertragung vom Brine, welches mit höherem Druck aus einem Reverse-Osmose Modul 2 ausströmt. Nach der Druckübertragung strömt die energiereichere Flüssigkeit aus einer Rohrkammer 3 über eine Einspeisung 14 in die Pumpvorrichtung 10.

Der andere Teilstrom der zu reinigenden Flüssigkeit strömt von der Vorpumpe 12 über eine Leitung 15 direkt zu der mehrstufigen ersten Kreiselpumpe 1.1, welche zusammen mit der zweiten Kreiselpumpe 6.1 in der Pumpvorrichtung 10 angeordnet ist. Innerhalb der Pumpvorrichtung 10 erfolgt eine Vereinigung der beiden zu reinigenden Teilströme, welche dann mit Hilfe der zweiten Kreiselpumpe 6.1 dem Reverse-Osmose Modul 2 zugeführt werden.

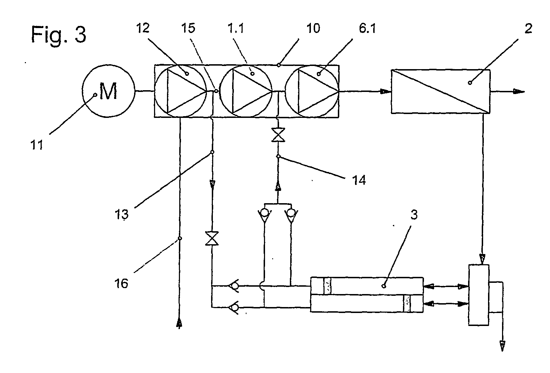

Die Fig. 3 zeigt ein Schaltschema, bei dem in die Pumpvorrichtung 10 zusätzlich die Vorpumpe 12 integriert ist. Sie wird ebenfalls von dem entsprechend ausgelegten Motor 12 der ersten 1.1 und zweiten Kreiselpumpe 6.1 angetrieben. Eine innerhalb der Reverse-Osmose-Anlage zu reinigende Flüssigkeit strömt über eine Leitung 16 vollständig der Vorpumpe 12 zu. Nach erfolgter Druckerhöhung durch die Vorpumpe 12 wird der eine Teilstrom der zu reinigenden Flüssigkeit über die Leitung 15, die hier als Entnahmeleitung wirkt, zur Druckerhöhung einer Rohrkammer 3 des Drucktauschers zugeführt. Der andere Teil der Vorpumpen-Fördermenge strömt dann direkt in die erste Kreiselpumpe 1.1 ein. Dort findet die Druckerhöhung statt, wie sie analog der Darstellung in Fig. 2 gezeigt ist. Und die Zurückführung des energiereicheren Fluids vom Drucktauscher zur Pumpvorrichtung 10 erfolgt ebenfalls analog Fig. 2.

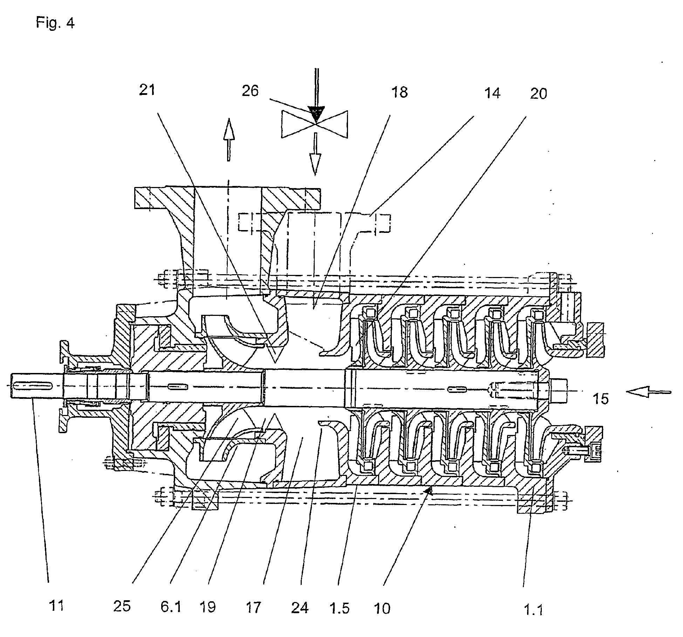

Die Fig. 4 zeigt einen Schnitt durch eine realisierbare Pumpvorrichtung 10 von Fig. 2. Ein am Wellenende angeordnetes Bezugszeichen 11 symbolisiert einen Motor 11, dessen Antriebskräfte an dieser Stelle in die Welle der Pumpvorrichtung eingeleitet werden. Ein zu reinigendes Fluid wird über eine Leitung 15 in die mehrstufige erste Kreiselpumpe 1.1 eingespeist. Diese fördert die Flüssigkeit mit höherem Druck in einen Sammelraum 17 der mit einer Eintrittsöffnung 18 einer zusätzlichen Einspeisung 14 versehen ist. Über die Einspeisung 14 tritt eine unter hohem Druck stehende Fluid in den Sammelraum 17 ein. Mit dem Sammelraum 17 ist die zweite Kreiselpumpe 6.1 verbunden, die für große Fördermengen und geringe Drucksteigerung ausgelegt ist. Über eine Saugöffnung 19 ist der Sammelraum 17 mit der zweiten Kreiselpumpe 6.1 verbunden.

Die hier letzte Stufe 1.5 der ersten Kreiselpumpe 1.1 ist mit einer ein- oder verstellbaren Leiteinrichtung 20 versehen. Ebenso kann eine ein- oder verstellbare Leiteinrichtung 20 an der ersten und/oder zweiten Kreiselpumpe die anfallende Fördermenge regeln. Hierzu können ein- oder verstellbare Leitschaufeln 21 Verwendung finden.

Im Sammelraum 17 angeordnete Einbauten 24 dienen zur verlustfreien Strömungsführung der innerhalb des Sammelraumes 17 aufeinander treffenden Teilströme.

An der Einspeisung 18 kann alternativ auch eine Drosselregelung 25 angeordnet sein, um die innerhalb des Sammelraumes 17 aufeinander treffenden Teilströme strömungsgünstig aufeinander abzustimmen. Vorzugsweise sind in der zweiten Kreiselpumpe 6.1 Laufräder 25 angeordnet, bei denen in Abhängigkeit von der - Recovery-Rate einer Reverse-Osmose Anlage deren spezifische Drehzahl nq = 40 - 200 min⁻¹ beträgt. Mit Hilfe solcher Laufräder 25 wird eine aus dem Sammelraum 17 entnommene größere Fördermenge strömungsgünstig zum Reverse-Osmose Modul 2 weitergefördert.

## Patentansprüche

1. Pumpvorrichtung (10) für die Aufbereitung von Flüssigkeiten nach dem Prinzip der Umkehrosmose, wobei zwei Pumpen mit einer Welle verbunden sind und von einem gemeinsamen Motor angetrieben werden, und eine erste Pumpe in das Gehäuse einer zweiten Pumpe fördert, wobei als erste Pumpe eine mehrstufige Kreiselpumpe (1.1) eine Flüssigkeit mit hohen Druck in einen Sammelraum (17) fördert, der Sammelraum (17) eine Eintrittsöffnung (18) für eine zusätzliche Einspeisung (14) von unter hohem Druck stehender Flüssigkeit aufweist, daß als zweite Pumpe eine für große Fördermengen und geringe Drucksteigerungen ausgelegte Kreiselpumpe (6.1) mit dem Sammelraum (17) verbunden ist und übero eine Saugöffnung (19) aus dem Sammelraum (17) ansaugt, **dadurch gekennzeichnet, daß** die Eintrittsöffnung (18) des Sammelraumes (19) mit einem Druckwandler (3) verbunden ist.

2. Pumpvorrichtung nach Anspruch 1, **dadurch gekennzeichnet, daß** innerhalb der Pumpvorrichtung (10) im Sammelraum (19) eine Vereinigung von zwei geteilten Flüssigkeitsströmen erfolgt und daß die zweite Kreiselpumpe (6.1) die Teilströme als einen vereinigten Gesamtstrom fördert.

3. Pumpvorrichtung nach Anspruch 1 oder 2, **dadurch gekennzeichnet, daß** eine ein- oder verstellbare Leiteinrichtung (20) an der ersten und/oder zweiten Kreiselpumpe (1.1, 6.1) die Fördermenge regelbar macht.

4. Pumpvorrichtung nach Anspruch 1, 2 oder 3, **dadurch gekennzeichnet, daß** die letzte Stufe (1.5) der ersten Kreiselpumpe (1.1) mit einer ein- oder verstellbaren Leiteinrichtung (20) versehen ist.

5. Pumpvorrichtung nach Anspruch 3 oder 4, **dadurch gekennzeichnet, daß** ein- oder verstellbare Leitschaufeln (21) die Leiteinrichtung (20) bilden.

6. Pumpvorrichtung nach Anspruch 3, 4 oder 5, **dadurch gekennzeichnet, daß** ein- oder verstellbare Schieber, Ringschieber, Drosselblenden oder andere Querschnitt verändernde Mittel die Leiteinrichtung (20) bilden.

7. Pumpvorrichtung nach einem der Ansprüche 1 bis 6, **dadurch gekennzeichnet, daß** die Leiteinrichtung (20) mit einer ein- oder verstellbaren Eintrittskante versehen ist.

8. Pumpvorrichtung nach einem der Ansprüche 1 bis 7, **dadurch gekennzeichnet, daß** ein aus dem Sammelraum (17) zur zweiten Kreiselpumpe (6.1) strömender Gesamtförderstrom zu 50 bis 30 % von der ersten Kreiselpumpe (1.8) und zu 50 bis 70 % von der durch die zusätzliche Einspeisung (14) gelieferten Menge einstellbar ist.

9. Pumpvorrichtung nach einem oder mehreren der Ansprüche 1 bis 8, **dadurch gekennzeichnet, daß** eine Drosselregelung (26) in einer mit der Eintrittsöffnung (18) der zusätzlichen Einspeisung (14) verbundenen Leitung angeordnet ist.

10. Pumpvorrichtung nach einem oder mehreren der Ansprüche 1 bis 9, **dadurch gekennzeichnet, daß** die zweite Kreiselpumpe (6.1) mit einer ein- oder verstellbaren, Lauf- und/oder Leiteinrichtung (20, 21) versehen ist.

11. Pumpvorrichtung nach einem oder mehreren der Ansprüche 1 bis 10, **dadurch gekennzeichnet, daß** in der zweiten Kreiselpumpe (6.1) Laufräder (25) mit einer spezifischen Drehzahl nq = 40 - 200 min⁻¹ angeordnet sind.

12. Pumpvorrichtung nach einem der Ansprüche 1 bis 11, **dadurch gekennzeichnet, daß** in die Pumpeinrichtung (10) und vor der ersten Kreiselpumpe (1.1) eine zusätzliche Vorpumpe (12) integriert ist.

13. Pumpvorrichtung nach einem der Ansprüche 1 bis 12, **dadurch gekennzeichnet, daß** eine im Sammelraum (17) bestehende Drallströmung durch eine variable Zuführung der in den Sammelraum (17) einmündenden Teilströme veränderbar ist.

14. Pumpvorrichtung nach einem der Ansprüche 1 bis 13, **dadurch gekennzeichnet, daß** als Antrieb ein drehzahlgeregelter Motor (11) Anwendung findet.

## Claims

1. Pumping device (10) for the treatment of liquids according to the principle of reverse osmosis, two pumps being connected to a shaft and being driven by a common motor, and a first pump conveying into the casing of a second pump, as the first pump a multistage centrifugal pump (1.1) conveying a liquid at high pressure into a collecting space (17), the collecting space (17) having an inlet port (18) for an additional feed (14) of liquid which is under high pressure, and as the second pump a centrifugal pump (6.1) designed for large conveyance quantities and low pressure rises being connected to the collecting space (17) and sucking in from the collecting space (17) via a suction port (19), **characterized in that** the inlet port (18) of the collecting space (19) is connected to a pressure converter (3).

2. Pumping device according to Claim 1, **characterized in that** a unification of two divided liquid streams takes place in the collecting space (19) within the pumping device (10), and **in that** the second centrifugal pump (6.1) conveys the part-streams as a unified overall stream.

3. Pumping device according to Claim 1 or 2, **characterized in that** a settable or adjustable guide device (20) on the first and/or the second centrifugal pump (1.1, 6.1) makes the conveyance quantity regulatable.

4. Pumping device according to Claim 1, 2 or 3, **characterized in that** the last stage (1.5) of the first centrifugal pump (1.1) is provided with a settable or adjustable guide device (20).

5. Pumping device according to Claim 3 or 4, **characterized in that** settable or adjustable guide vanes (21) form the guide device (20).

6. Pumping device according to Claim 3, 4 or 5, **characterized in that** settable or adjustable slides, annular slides, throttle diaphragms or other means which vary cross section form the guide device (20).

7. Pumping device according to one of Claims 1 to 6, **characterized in that** the guide device (20) is provided with a settable or adjustable inlet edge.

8. Pumping device according to one of Claims 1 to 7, **characterized in that** an overall conveyance stream flowing out of the collecting space (17) to the second centrifugal pump (6.1) can be set at 50 to 30% of the quantity delivered by the first centrifugal pump (1.8) and at 50 to 70% of the quantity delivered by the additional feed (14).

9. Pumping device according to one or more of Claims 1 to 8, **characterized in that** a throttle regulation (26) is arranged in a line connected to the inlet port (18) of the additional feed (14).

10. Pumping device according to one or more of Claims 1 to 9, **characterized in that** the second centrifugal pump (6.1) is provided with a settable or adjustable running and/or guide device (20, 21).

11. Pumping device according to one or more of Claims 1 to 10, **characterized in that** rotors (25) with a specific rotational speed nq = 40 - 200 min⁻¹ are arranged in the second centrifugal pump (6.1).

12. Pumping device according to one of Claims 1 to 11, **characterized in that** an additional pre-pump (12) is integrated into the pumping device (10) and upstream of the first centrifugal pump (1.1).

13. Pumping device according to one of Claims 1 to 12, **characterized in that** a swirl flow existing in the collecting space (17) can be varied by means of a variable supply of the part-streams issuing into the collecting space (17).

14. Pumping device according to one of Claims 1 to 13, **characterized in that** a variable-speed motor (11) is used as a drive.

## Revendications

1. Dispositif de pompe (10) pour la préparation de liquides selon le principe de l'osmose inverse, dans lequel deux pompes sont connectées à un arbre et sont entraînées par un moteur commun, et une première pompe refoule dans le carter d'une deuxième pompe, une pompe centrifuge (1.1) en tant que première pompe refoulant un liquide à haute pression dans un espace collecteur (17), l'espace collecteur (17) présentant une ouverture d'entrée (18) pour une injection supplémentaire (14) de liquide haute pression, une pompe centrifuge (6.1) en tant que deuxième pompe étant connectée à l'espace collecteur (17) et aspirant par le biais d'une ouverture d'aspiration (19) hors de l'espace collecteur (17), **caractérisé en ce que** l'ouverture d'entrée (18) de l'espace collecteur (19) est connectée à un convertisseur de pression (3).

2. Dispositif de pompe selon la revendication 1, **caractérisé en ce que** deux courants de liquide séparés sont réunis à l'intérieur du dispositif de pompe (10) dans l'espace collecteur (19), et **en ce que** la deuxième pompe centrifuge (6.1) refoule les courants partiels sous forme d'un courant total réuni.

3. Dispositif de pompe selon la revendication 1 ou 2, **caractérisé en ce qu'**un dispositif directeur (20) ajustable ou réglable permet de régler la quantité refoulée au niveau de la première et/ou de la deuxième pompe centrifuge (1.1, 6.1).

4. Dispositif de pompe selon la revendication 1, 2 ou 3, **caractérisé en ce que** le dernier étage (1.5) de la première pompe centrifuge (1.1) est pourvu d'un dispositif directeur (20) ajustable ou réglable.

5. Dispositif de pompe selon la revendication 3 ou 4, **caractérisé en ce que** des aubes directrices (21) ajustables ou réglables forment le dispositif directeur (20).

6. Dispositif de pompe selon la revendication 3, 4 ou 5, **caractérisé en ce que** des tiroirs, tiroirs annulaires, des diaphragmes d'étranglement ou d'autres moyens ajustables ou réglables modifiant la section transversale forment le dispositif directeur (20).

7. Dispositif de pompe selon l'une quelconque des revendications 1 à 6, **caractérisé en ce que** le dispositif directeur (20) est pourvu d'une arête d'attaque ajustable ou réglable.

8. Dispositif de pompe selon l'une quelconque des revendications 1 à 7, **caractérisé en ce qu'**un courant refoulé total s'écoulant hors de l'espace collecteur (17) vers la deuxième pompe centrifuge (6.1) peut être ajusté à 50 à 30% de la première pompe centrifuge (1.8) et à 50 à 70% de la quantité fournie par l'injection supplémentaire (14).

9. Dispositif de pompe selon l'une quelconque ou plusieurs des revendications 1 à 8, **caractérisé en ce qu'**un réglage par étranglement (26) est prévu dans une conduite connectée à l'ouverture d'entrée (18) de l'injection supplémentaire (14).

10. Dispositif de pompe selon l'une quelconque ou plusieurs des revendications 1 à 9, **caractérisé en ce que** la deuxième pompe centrifuge (6.1) est pourvue d'un dispositif mobile et/ou directeur (20, 21) ajustable ou réglable.

11. Dispositif de pompe selon l'une quelconque ou plusieurs des revendications 1 à 10, **caractérisé en ce que** des roues mobiles (25) sont disposées dans la deuxième pompe centrifuge (6.1) avec une vitesse spécifique nq = 40 - 200 min⁻¹.

12. Dispositif de pompe selon l'une quelconque des revendications 1 à 11, **caractérisé en ce qu'**une prépompe supplémentaire (12) est intégrée dans le dispositif de pompe (10) et avant la première pompe centrifuge (1.1).

13. Dispositif de pompe selon l'une quelconque des revendications 1 à 12, **caractérisé en ce qu'**un écoulement tourbillonnaire existant dans l'espace collecteur (17) peut être modifié par un apport variable des courants partiels débouchant dans l'espace collecteur (17).

14. Dispositif de pompe selon l'une quelconque des revendications 1 à 13, **caractérisé en ce que** l'on utilise comme entraînement un moteur à vitesse réglable (11).
